# EUROPÄISCHE PATENTSCHRIFT

(11) **EP 2 659 944 B1**
(45) Veröffentlichungstag und Bekanntmachung des Hinweises auf die Patenterteilung: **15.08.2018**
(21) Anmeldenummer: 13165132.5
(22) Anmeldetag: 24.04.2013
(51) Int. Cl.: B01D 21/00, B01D 21/02, B01D 21/26, E03F 5/04

(54) **FILTERANORDNUNG UND VERFAHREN ZUM EINBAUEN DER FILTERANORDNUNG**
FILTER ASSEMBLY AND METHOD FOR INSTALLING THE FILTER ASSEMBLY
AGENCEMENT DE FILTRATION ET PROCÉDÉ D'INTÉGRATION DE L'AGENCEMENT DE FILTRATION

(30) Priorität: 04.05.2012 DE 102012008734
(43) Veröffentlichungstag der Anmeldung: 06.11.2013
(73) Patentinhaber: Heinrich Meier Eisengiesserei GmbH & Co. KG, 32369 Rahden (DE)
(72) Erfinder: Sonnenberg, Ralf, 32120 Hiddenhausen (DE); Schäll, Eduard, 32369 Rahden (DE); Torras-Piqué, Jorge, 73337 Bad Überkingen (DE)
(74) Vertreter: Patentanwälte Olbricht Buchhold Keulertz

(56) Entgegenhaltungen:
- EP-A1- 2 020 465
- EP-A1- 2 353 687
- DE-A1- 10 156 563
- DE-A1-102005 044 166
- DE-A1-102010 044 971
- DE-U1-202009 011 400
- US-A1- 2004 251 185
- US-A1- 2006 237 369

## Beschreibung

Die Erfindung betrifft eine Filteranordnung gemäß dem Oberbegriff von Anspruch 1. Diese Filteranordnung wird beispielsweise in einen Straßenablaufschacht eines Straßenablaufs integriert und weist eine Aufstrom-Filtereinheit und einen Schachtkörper auf, wobei die Filtereinheit in dem Schachtkörper aufgenommen ist.

Ferner betrifft die Erfindung ein Verfahren zum Einbauen der Filteranordnung gemäß Anspruch 11.

Wasser, insbesondere Oberflächenwasser, das durch Niederschlagsereignisse in den Straßenablauf gelangt, weist Verunreinigungen auf. Neben groben Verunreinigungen wie Blätter, Äste und ähnliches sind in dem Wasser auch gelöste und ungelöste Schadstoffe enthalten. Derart mit Feststoffpartikeln und/oder mit gelösten Schadstoffen belastetes Wasser darf auf Grund verschiedener Verordnungen, wie z.B. der Bundes-Bodenschutz- und Altlastenverordnung oder der Europäischen Wasserrahmenrichtlinie, nicht ohne vorherige Reinigung und Behandlung im Untergrund versickert werden oder anderweitig, z.B. als Brauchwasser, weiterverwendet werden.

Es ist daher bekannt, in Ablaufschächten eines Straßenablaufs Filtereinheiten zum Reinigen von belastetem Oberflächenwasser anzuordnen. Das Oberflächenwasser ist i.d.R. von versiegelten Flächen, wie beispielsweise Straßen, Parkflächen oder Lande- und Rollbahnen, abfließendes Regenwasser. Diese Flächen weisen Verunreinigungen in Form von z.B. Brems- und Reifenabrieb oder durch Katalysatorausstoß verursachte Schadstoffe, insbesondere Schwermetalle, Öle und polyaromatische Kohlenwasserstoffe auf. Das Oberflächenwasser kann aber auch Wasser sein, das von Dächern und anderen Einrichtungen abfließt. Insbesondere bei Metalldächern nimmt das Wasser dabei Schwermetalle auf, die dann als Schwermetall-Ionen in hydrostatischer Form mitgeschwemmt werden.

DE 10 2010 044 971 A1 zeigt eine Aufstrom-Filtervorrichtung, die derartig in einen Straßenablaufschacht einsetzbar ist, dass Wasser zunächst durch einen korbförmigen Schmutzfänger fließt und von dort zu einem Zulauf der Filtereinheit gelangt. Das Wasser wird vom Zulauf über eine Strömungsbrücke unter Umgehung der Filtereinheit in eine Sedimentationskammer geleitet und steigt von dort durch die Filtereinheit wieder auf, um schließlich durch einen Ablauf die Filtereinheit in gereinigter Form zu verlassen.

Eine derartige Filtereinheit arbeitet an sich zufriedenstellend. Allerdings ist es relativ aufwendig, mit einer derartigen Filtereinheit die steigenden Anforderungen an die Reinheit des Wassers nach der Filtereinheit zu erfüllen.

Zwar kann eine relativ hohe Reinheit durch entsprechend feine Filter innerhalb der Filtereinheit erreicht werden, diese setzen sich jedoch relativ schnell zu, so dass ein erhöhter Wartungsaufwand die Folge ist.

Weiterhin offenbart DE 20 2009 011 400 U1 einen Kanalschacht mit einer Abdeckung. Innerhalb des Schachts ist eine Filtereinheit angeordnet. Einströmendes Wasser wird zunächst in den Kanalschacht geleitet und hier gesammelt. Der Zulauf der Filtereinheit ist an deren Unterseite angeordnet, sodass Wasser aus dem Schachtkörper aufströmend durch ein Filtermedium in der Filtereinheit fließt und oberhalb des Filtermediums in einen Abfluss geleitet wird. Zudem ist ein Überlauf vorgesehen dessen Zulauf nach unten gerichtet ist, damit kein Frischwasser ohne Filtration direkt in den Abfluss gelangt, es sei denn im Schachtkörper übersteigt der Wasserspiegel den Überlauf bzw. Abfluss.

Aus DE 10 2005 044 166 A1 ist eine Filtereinrichtung bekannt, deren Filtermaterial im Abstrom durchströmt wird. Auch US 2006/237369 A1 offenbart einen Abstromfilter.

In DE 101 56 563 A1 wird eine Absetz- und Versitzgrube zum Sammeln und Vorreinigen von Straßenwasser beschrieben. Diese besteht aus einem Betonschacht mit festem Boden, der als Absetzgrube dient. Darunter liegt ein Betonlochring, der eine Versitzgrube ausbildet. Straßenabwasser wird von der Absetzgrube über einen PVC Schlauch, dessen Einlauf mittels Schwimmer ca. 10 cm unter der Wasseroberfläche gehalten wird, langsam bis zur völligen Entleerung in die Versitzgrube und versickert.

EP 2 353 687 A1 zeigt eine Filterzelle, bei der ein Zulauf und ein Auslauf jeweils im oberen Drittel seitlich vorgesehen ist. Der Zulauf führt in einen helixförmigen, äußeren Kanal der Filterzelle. Dieser Kanal leitet zufließendes Wasser spiralförmig nach unten in eine untere Kammer der Filterzelle. Aus dieser Kammer steigt das Wasser durch ein zentrales, vertikales Steigrohr nach oben in eine obere Kammer der Filterzelle. Aus der oberen Kammer wird das Wasser über den Auslauf abgeführt.

EP 2 020 465 A1 beschreibt eine Filterzelle mit einer Absetzkammer.

US 2004 251 185 A1 offenbart eine Filtereinheit in einem Schachtkörper. Der Schachtkörper ist mit einem Gullydeckel abgedeckt, welcher über der gesamten Fläche Durchtrittsöffnungen aufweist. In dem Schachtkörper gesammeltes Wasser steigt von unten durch eine Zutrittsöffnung in die Filtereinheit und durchströmt aufwärts ein erstes Filtermedium in einer ersten Filterkammer. Im oberen Bereich der Filtereinheit überströmt das Wasser einen Überlauf und durchströmt anschließend abwärts ein zweites Filtermedium in einer zweiten Filterkammer. Im unteren Bereich der zweiten Filterkammer strömt das Wasser anschließend in einen Auslass.

Der Erfindung liegt daher die Aufgabe zugrunde eine Filteranordnung bereitzustellen, die eine gute Reinigungsleistung bei geringem Wartungsaufwand aufweist und eine dezentrale Anordnung ermöglicht. Darüber hinaus soll diese Filteranordnung relativ einfach und kostengünstig herstellbar sein.

Erfindungsgemäß wird diese Aufgabe durch eine Filteranordnung mit den Merkmalen des Anspruchs 1 gelöst.

Hauptmerkmale der Erfindung sind im kennzeichnenden Teil von Anspruch 1 angegeben. Ausgestaltungen sind Gegenstand der Ansprüche 2 bis 10.

Zufließendes Wasser ist also vor Erreichen der Filtereinheit in einer Vorkammer des Schachtkörpers sammelbar, wobei ein Zulauf der Filtereinheit mit der Vorkammer in Verbindung steht.

Das zufließende Wasser gelangt also nicht direkt in den Zulauf der Filtereinheit, sondern strömt zunächst in die Vorkammer. Diese Vorkammer ist durch einen freien Raum zwischen einer Innenwandung des Schachtkörpers und der Filtereinheit gebildet. In dieser Vorkammer erfolgt eine Beruhigung des Wassers und eine Vorsedimentation, also ein Absenken von Schwebstoffen, die mit dem Wasser in die Filteranordnung getragen werden. Die Schwebstoffe lagern sich dabei auf dem Boden der Vorkammer ab. Um die Filteranordnung zu reinigen, können die Sedimente dort problemlos abgesaugt werden. Von der Vorkammer gelangt das Wasser dann erst zu der eigentlichen Filtereinheit, wobei das Wasser aufgrund der erfolgten Vorsedimentation dann bereits einen erhöhten Reinheitsgrad aufweist. Insbesondere größere Verschmutzungen gelangen daher gar nicht erst in die Filtereinheit, die dann eine hohe Reinigungsleistung des Wassers erzielen kann.

Dabei ist der Zulauf der Filtereinheit unterhalb einer Oberkante des Schachtkörpers angeordnet ist. Der Schachtkörper kann dann durch das zulaufende Wasser nahezu vollständig gefüllt werden, wobei gewährleistet ist, dass das Wasser nicht über die Oberkante des Schachtkörpers hinausläuft, da es vorher über den Zulauf in die Filtereinheit strömt. Für die Vorkammer steht damit sehr viel Raum zur Verfügung.

Bevorzugterweise weist der Schachtkörper eine Abdeckplatte mit einer Einlassöffnung auf, in der eine Umlenkplatte angeordnet ist. Der Schachtkörper selbst kann dann relativ einfach, beispielsweise becherförmig, mit einem Boden und senkrechten Seitenwänden ausgebildet sein. Die Abdeckplatte kann an einer offenen Stirnseite der Filteranordnung angeordnet werden und bildet damit einen Schachtkopf. Die Einlassöffnung ermöglicht zum einen das Einströmen von Wasser, zum anderen aber auch, gegebenenfalls nach Entfernen der Umlenkplatte, den Zugang zur Filtereinheit, um beispielsweise Wartungsarbeiten durchführen zu können. Dafür können in der Abdeckplatte auch weitere Ausnehmungen vorgesehen sein. Die Einlassöffnung kann dabei einen freien Querschnitt aufweisen, durch den die Filtereinheit einsetzbar ist. Die Einlassöffnung ist also groß genug, um auch die gesamte Filtereinheit austauschen zu können. Auch ist es dadurch möglich, die Filtereinheit erst nach dem Einbauen des Schachtkörpers in einen Straßenuntergrund zu installieren. Dabei ist eine Platzierung der Filtereinheit nahezu axial unterhalb der Einlassöffnung mit geringem Aufwand möglich. Die Umlenkplatte gewährleistet, dass zuströmendes Wasser nicht direkt auf die Filtereinheit trifft, sondern dass das Wasser seitlich bzw. radial neben der Filtereinheit in die Vorkammer des Schachtkörpers gelangt und dort gesammelt wird. Die Umlenkplatte kann auch dazu dienen, zuströmendes Wasser zunächst zu beruhigen, um eine Reinigungswirkung zu verbessern.

Dabei ist besonders bevorzugt, dass die Umlenkplatte einen Boden und eine Seitenwand aufweist, die einen Auflagerand aufweist, der an einem Rand der Einlassöffnung aufliegt. Die Umlenkplatte kann also in die Einlassöffnung eingehängt werden. Dies stellt eine relativ einfache Montagemöglichkeit dar. Der Boden der Umlenkplatte kann dann parallel zur Abdeckplatte ausgerichtet sein, wobei er insbesondere waagerecht verläuft. Dadurch können schwere Teilchen aus dem Wasser bereits entfernt werden, die dann auf dem Boden der Umlenkplatte liegen bleiben.

Vorzugsweise weist die Umlenkplatte einen Auslass auf, wobei in der Abdeckplatte zwischen Auslass und Vorkammer ein Kanal ausgebildet ist. Durch den Auslass wird das Wasser gezielt in einer Richtung von der Umlenkplatte weitergeführt, sodass sichergestellt ist, dass das Wasser nicht direkt auf die Filtereinheit gelangt, sondern zunächst in der Vorkammer gesammelt wird. Dabei steht durch den Kanal ein ausreichend großer, freier Querschnitt zur Verfügung, sodass das Wasser relativ ungehindert von der Umlenkplatte in die Vorkammer gelangen kann.

Die Umlenkplatte weist bevorzugterweise mindestens einen Notüberlauf auf. Dieser Notüberlauf ist beispielsweise in der Seitenwand der Umlenkplatte ausgebildet. Bei starkem Wasserzulauf kann das zulaufende Wasser dann über den oder die Notüberläufe unter Umgehung der Abscheideplatte vorbei an der Filtereinheit in die Vorkammer geleitet werden. Dieser Umstand sorgt dafür, dass die Funktion der Filtereinheit nicht beeinträchtigt wird.

Dabei ist besonders bevorzugt, dass in der Seitenwand der Umlenkplatte Schmutzfängertaschen ausgebildet sind. Schmutzfängertaschen sind beispielsweise durch radiale Ausbuchtungen in der Seitenwand gebildet.

Vorzugsweise endet der Kanal radial neben dem Zulauf der Filtereinheit, wobei zwischen dem Kanal und dem Zulauf eine Abscheideplatte angeordnet ist, die den Zulauf zumindest teilweise überdeckt. Der Kanal führt das zuströmende Wasser also derart, dass es nicht direkt auf die Filtereinheit gelangen kann. Vielmehr wird das zuströmende Wasser durch den Kanal in die Vorkammer geleitet. Die Abscheideplatte sorgt dann dafür, dass nicht das gerade in die Vorkammer gelangte Wasser in den Zulauf strömt, sondern dass das Wasser erst in der Vorkammer beruhigt wird. Dabei taucht die Abscheideplatte bei normalem Füllstand der Vorkammer in das in der Vorkammer befindliche Wasser ein. Leichte Stoffe, insbesondere Flüssigkeiten wie Öle, Fette und Treibstoffe, werden daher durch die Abscheideplatte abgeschieden und können in einer Abscheidekammer gesammelt werden.

Außerdem weist die Filtereinheit einen Ablauf auf, der über ein Abflussrohr fluiddicht mit einer Abflussöffnung im Schachtkörper verbunden ist. Das gefilterte und damit gereinigte Wasser wird von der Filtereinheit über das Abflussrohr aus dem Schachtkörper heraustransportiert. Dabei ist die Abflussöffnung des Schachtkörpers beispielsweise mit einem Abwasserkanal im Erdreich verbunden. Das gereinigte Wasser kommt damit nicht mehr in Kontakt mit dem zuströmenden Wasser. Dabei durchragt das Abflussrohr sozusagen die Vorkammer.

Vorteilhafterweise ist das Abflussrohr mit einer Dichtmuffe im Ablauf und/oder in der Abflussöffnung befestigt. Damit ist eine sehr dichte Verbindung gewährleistet, sodass ein ungewolltes Eintreten des Wassers aus der Vorkammer in das Abflussrohr unter Umgehung der Filtereinheit vermieden wird.

Vorzugsweise kann ein Überlauf im Schachtkörper angeordnet werden, wobei eine Einlauföffnung des Überlaufs tiefer als eine Oberkante des Schachtkörpers aber höher als eine Unterkante des Zulaufs angeordnet ist. Bei Starkregenereignissen kann es beispielsweise vorkommen, dass nicht so viel Wasser durch die Filtereinheit gereinigt werden kann, wie zuströmt. Damit dieses Wasser dann nicht nach oben beispielsweise auf einen Straßenkörper gelangt, ist der Überlauf vorgesehen. Für den Fall, dass die Filtereinheit nicht ausreichend Wasser aufnehmen kann, ist der Überlauf höher angeordnet als der Zulauf, sodass das Wasser erst dann in den Überlauf gelangt, wenn der Wasserpegel über die Höhe des Zulaufs ansteigt.

Dabei ist besonders bevorzugt, dass der Überlauf mit dem Abflussrohr verbunden ist, wobei das Abflussrohr insbesondere in einem Bereich in Strömungsrichtung hinter dem Überlauf gegenüber einem Bereich vor dem Überlauf abgesenkt ist. Durch die direkte Einleitung in das Abflussrohr sind alle Verbindungsstellen innerhalb des Schachtkörpers ausgebildet und können damit vorgefertigt werden. Durch ein Absenken des Abflussrohrs in Strömungsrichtung hinter der Verbindungsstelle mit dem Überlauf wird gewährleistet, dass Wasser aus dem Überlauf nicht in Richtung Filtereinheit strömt, sondern in Richtung Abflussöffnung des Schachtkörpers.

Vorzugsweise ist oberhalb der Abdeckplatte ein insbesondere korbartiger Schmutzfänger angeordnet, der eine axiale Eintrittsöffnung an seiner oberen Stirnseite und radiale Austrittsöffnungen in seiner Umfangsfläche aufweist. Der Schmutzfänger kann dabei insbesondere eine völlig offene Stirnseite aufweisen. Er dient dazu, gröbere Verunreinigungen, wie beispielsweise Blätter und Äste aufzuhalten, sodass diese gar nicht erst durch die Einlassöffnung der Abdeckplatte gelangen.

Dabei ist besonders bevorzugt, dass die Filtereinheit, die Umlenkplatte und der Schmutzfänger nahezu axial übereinander angeordnet sind. Die Montage der Filteranordnung ist dann relativ einfach. Dabei können radiale Abmessungen des Schachtkörpers relativ gering gehalten werden.

Vorzugsweise steht die Filtereinheit auf einem Boden des Schachtkörpers auf und ist insbesondere an einem oberen Ende über Auftriebssicherungen mit dem Schachtkörper verbunden. Die Filtereinheit kann dann die gesamte axiale Länge des Schachtkörpers ausnutzen. Damit steht relativ viel Raum für den eigentlichen Filter der Filtereinheit zur Verfügung. Durch eine Verbindung der Filtereinheit über Auftriebssicherungen an ihrem oberen Ende wird zum einen ein sicherer Halt der Filtereinheit innerhalb des Schachtkörpers auch dann gewährleistet, wenn der Schachtkörper vollständig mit Wasser gefüllt ist, zum anderen sind die Auftriebssicherungen aufgrund ihrer Lage am oberen Ende relativ einfach zu erreichen, sodass die Montage problemlos möglich ist.

Weiterhin weist die Filtereinheit eine Absetzkammer auf. Diese zweite Absetzkammer dient als zweite Sedimentationskammer zur Feinsedimentation. Es erfolgt also ein mehrstufiger Reinigungsprozess, der zu hohen Abfiltrationswerten führt.

Vorteilhafterweise weist die Filtereinheit einen Filter auf, der als Filterpatrone ausgebildet ist. Dadurch lässt sich der Filter relativ einfach austauschen. Dabei kann der Filter ein lonenaustauschermaterial aufweisen und insbesondere mehrere Schichten aus lonenaustauschermaterial umfassen. Damit wird eine höhere Reinigungswirkung erzielt. Zusätzlich kann zumindest eine Schicht aus Aktivkohle vorgesehen sein, die einen Rückhalt von Mineralölen ermöglicht.

Bevorzugterweise weist die Abdeckplatte und der Schachtkörper Beton sowie die Umlenkplatte und die Abscheideplatte Gusseisen auf. Beton ist ein sehr robuster und korrosionsresistenter Werkstoff. Gusseisen ermöglicht eine relativ freie Formgestaltung und insbesondere die Herstellung weniger voluminöser Elemente als beispielsweise mit Beton.

Die Aufgabe wird auch durch ein Verfahren mit den Merkmalen des Anspruchs 11 gelöst. Dabei wird die Filteranordnung in einem Straßenablaufschacht derart eingelassen, dass sich der Zulauf der Filtereinheit auf gleicher Höhe oder tiefer als ein oberes Ende einer Frostschutzschicht befindet.

Dadurch wird gewährleistet, dass Wasser, das in die Vorkammer gelangt, unter normalen Umständen nicht gefriert. Vielmehr ist die Filteranordnung so tief in einem Erdreich angeordnet, dass ein Gefrieren von Wasser nicht nur in der Vorkammer, sondern auch in der Filtereinheit verhindert wird. Schäden durch Frost sind daher kaum zu erwarten, sodass eine geringe Fehleranfälligkeit erhalten wird.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnungen. Hierin zeigen:
- Fig. 1: eine Filteranordnung in geschnittener Seitenansicht,
- Fig. 2: die Filteranordnung im eingebautem Zustand,
- Fig. 3: eine Abdeckplatte,
- Fig. 4: eine Umlenkplatte in Draufsicht,
- Fig. 5: die Umlenkplatte in geschnittener Seitenansicht,
- Fig. 6: einen Überlauf und
- Fig. 7a und 7b: eine Abscheideplatte.

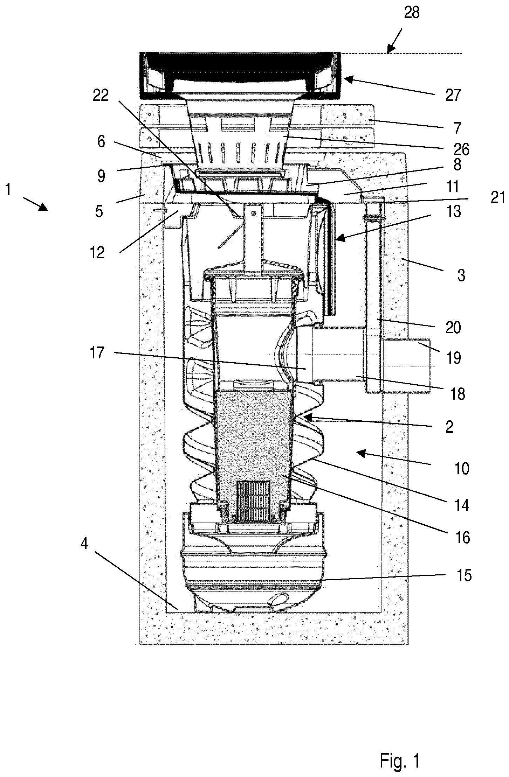

In Figur 1 ist eine Filteranordnung 1 dargestellt, die eine Filtereinheit 2 und einen Schachtkörper 3 aufweist. Die Filtereinheit 2 ist dabei innerhalb des Schachtkörpers 3 aufgenommen, der becherförmig ausgebildet ist und eine rechteckige Grundform aufweisen kann. Dabei ist die Filtereinheit 2 auf einem Boden 4 des Schachtkörpers 3 aufgesetzt.

Der Schachtkörper 3 weist an einem oberen Ende eine Abdeckplatte 5 auf, die eine Einlassöffnung 6 aufweist. Oberhalb der Abdeckplatte 5 sind zwei Ausgleichsringe 7 angeordnet. In der Einlassöffnung 6 ist eine Umlenkplatte 8 angeordnet, die mit einem Auflagerand 9 an einem Rand der Einlassöffnung 6 aufliegt.

Im Schachtkörper 3 ist eine Vorkammer 10 ausgebildet, die durch den freien Raum zwischen der Filtereinheit 2 und Innenseiten des Schachtkörpers 3 gebildet ist. Zuströmendes Wasser gelangt über die Einlassöffnung 6 auf die Umlenkplatte 8 und von dort durch einen Kanal 11 in der Abdeckplatte 5 in die Vorkammer 10. Von der Vorkammer 10 gelangt das Wasser dann über einen Zulauf 12 der Filtereinheit 2 in die Filtereinheit 2. Ein direktes Einströmen des Wassers beim Austreten aus dem Kanal 11 wird durch eine Abscheideplatte 13 verhindert, die den Zulauf 12 der Filtereinheit 2 teilweise überragt. Die Abscheideplatte 13 taucht dabei in die Wasseroberfläche ein und bewirkt ein Abscheiden leichter Stoffe, wie beispielsweise von Ölen, Fetten und Treibstoffen.

Der Zulauf 12 der Filtereinheit 2 weist eine Ringkammer auf, die über eine spiralförmige Strömungsbrücke 14 mit einer innerhalb der Filtereinheit 2 ausgebildeten Absetzkammer 15 verbunden ist. In der Absetzkammer erfolgt eine zweite Sedimentation, so dass auch feinere Schwebeteile bereits vor Erreichen des eigentlichen Filters abgeschieden werden.

Von der Absetzkammer 15 steigt das Wasser aufgrund des hydrostatischen Drucks durch einen als Filterpatrone ausgebildeten Filter 16 der Filtereinheit 2 auf, wobei eine Behandlung des Wassers durch den Filter stattfindet, der ein lonenaustauschermaterial aufweist. Von dort gelangt das gereinigte Wasser zu einem Ablauf 17 der Filtereinheit, der über ein Abflussrohr 18 mit einer Abflussöffnung 19 im Schachtkörper 3 verbunden ist. Das Wasser wird dadurch aus dem Schachtkörper 3 herausbefördert und kann beispielsweise in einen angeschlossenen Abwasserkanal, einen Versickerungsbereich oder in natürliche Gewässer geleitet werden.

Die Filteranordnung 1 kann einen Überlauf 20 auf, der mit dem Abflussrohr 18 verbunden ist. In der höchsten Reinigungsstufe ist der Überlauf nicht vorhanden oder weist, wie dargestellt, eine obere, geschlossene Stirnseite 21 auf, die sich oberhalb einer oberen Kante 22, des Zulaufs 12 befindet.

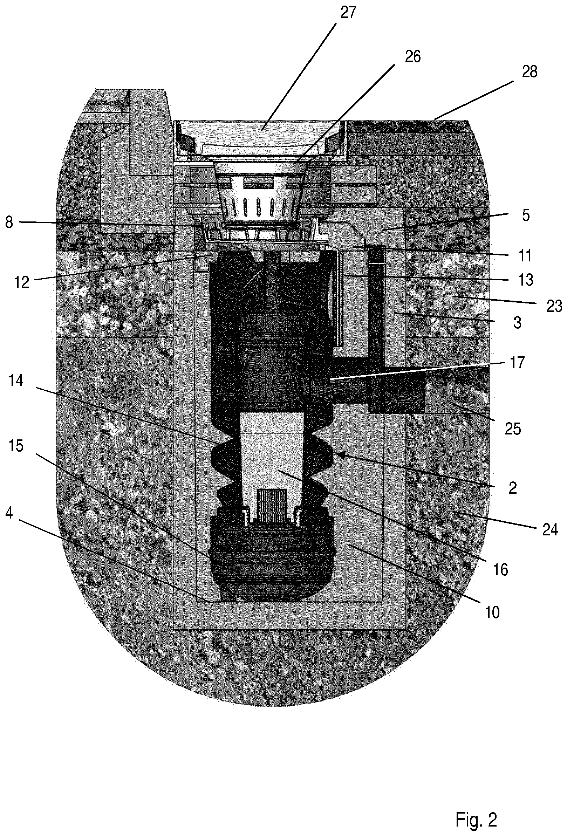

In Fig. 2 ist die Filteranordnung 1 in eingebautem Zustand dargestellt. Die Filteranordnung 2 ist dabei in einem Straßenbauwerk derartig aufgenommen, dass die Filtereinheit 2 unterhalb einer Oberkante einer Frostschutzschicht 23 liegt. Der Schachtkörper 3 erstreckt sich dabei über die Frostschutzschicht 23 hinaus bis in einen Untergrund 24 des Straßenbauwerks.

Im Untergrund 24 ist dabei ein Abflusskanal 25 ausgebildet, der mit der Abflussöffnung 19 des Schachtkörpers 3 verbunden ist.

Im Bereich der Einlassöffnung 6 ist ein korbartiger Schmutzfang 26 angeordnet, der in seiner Umfangswand radiale Austrittsöffnungen aufweist. Axial oberhalb des Schmutzfangs befindet sich eine wasserdurchlässige Schachtabdeckung 27. Die Schachtabdeckung 27, der Schmutzfang 26, die Einlassöffnung 6 und die Filtereinheit 2 sind dabei nahezu axial übereinander angeordnet. Die Schachtabdeckung 27 schließt dabei bündig mit einer Straßenoberfläche 28 ab.

Bei Niederschlägen, wie beispielsweise Regenfällen, gelangt Wasser durch die Schachtabdeckung 27 zunächst in den Schmutzfang 26 und tritt durch dessen Austrittsöffnungen radial aus. In dem Schmutzfang 26 werden dabei grobe Verunreinigungen, wie beispielsweise Äste und Blätter aufgehalten. Das Wasser gelangt anschließend durch die Einlassöffnung 6 auf die Umlenkplatte 8, die das Wasser derartig umlenkt, dass es durch den Kanal 11 radial neben der Filtereinheit 2 in den Schachtkörper 3 eintritt. Dabei wird das Wasser zunächst in der Vorkammer 10 des Schachtkörpers 3 gesammelt. Der Schachtkörper 3 bzw. die Vorkammer 10 ist in der Regel mit Wasser gefüllt, wobei ein Füllstand bis zu der Oberkante 22 des Zulaufs 12 der Filtereinheit 2 reicht und die Abscheideplatte 13 die Wasseroberfläche durchdringt. Durch die Abdeckplatte 13 wird dabei verhindert, dass das Wasser nach dem Austritt aus dem Kanal 11 direkt in den Zulauf 12 der Filtereinheit 2 fließt. Anschließend fließt das Wasser durch die Filtereinheit 2 und gelangt durch das Abflussrohr 18 im gereinigten Zustand in den Abwasserkanal 25.

Das durch die Schachtabdeckung 27 strömende Wasser durchströmt damit mehrere Reinigungsstufen. Eine erste Reinigung erfolgt im Schmutzfang 26, in dem grobe Verunreinigungen zurückgehalten werden. Auf der Umlenkplatte 11 erfolgt dann eine erste Ablagerung von Schwebstoffen. In der Vorkammer, die sich daran anschließt, erfolgt dann eine Vorsedimentation, wobei aufgrund des relativ großen Volumens der Vorkammer eine relativ starke Beruhigung des Wassers erreicht wird, sodass ausreichend Zeit zum Absenken der Schwebstoffe vorhanden ist, bevor das Wasser in die eigentliche Filtereinheit 2 gelangt. Durch die Strömungsbrücke 14 zwischen Zulauf 12 und der Absetzkammer 15 innerhalb der Filtereinheit 2 können dabei beispielsweise auch Öle und ähnliches getrennt werden. Im Filter 16 der Filtereinheit 2 erfolgt dann eine Feinreinigung, sodass sehr sauberes Wasser in den Abwasserkanal 25 gelangt.

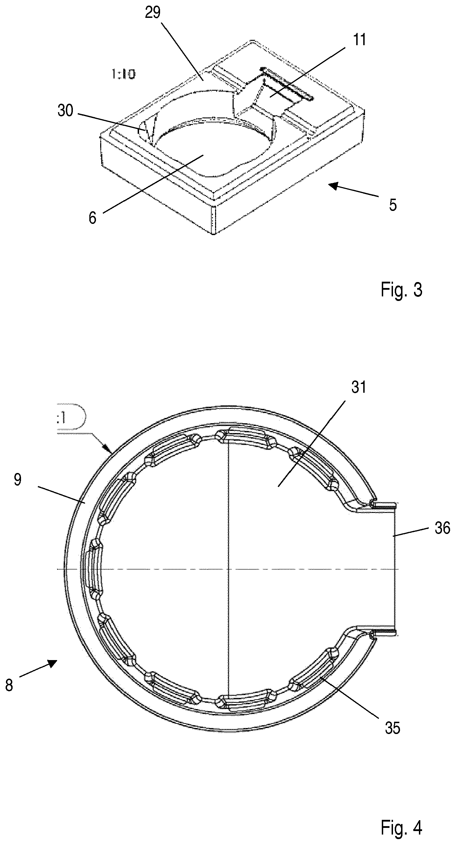

Fig. 3 zeigt die Abdeckplatte 5 in dreidimensionaler Ansicht von einer Unterseite 29 aus. Diese Unterseite 29 ist im montierten Zustand der Filtereinheit 2 bzw. dem Inneren des Schachtkörpers 3 zugewandt. Die Einlassöffnung 6 weist einen runden Querschnitt auf, von dem der Kanal 11 ausgeht. An einem Rand der Einlassöffnung 6 ist dabei eine Ausbuchtung 30 vorgesehen, die zum Einführen eines Reinigungsschlauches dient. Die Abdeckplatte 5 ist dabei aus Beton hergestellt und bildet einen Schachtkopf. Über den Reinigungsschlauch lässt sich dann die Vorkammer und, nach Entfernen des Filters aus der Filtereinheit, auch die Absetzkammer relativ einfach reinigen.

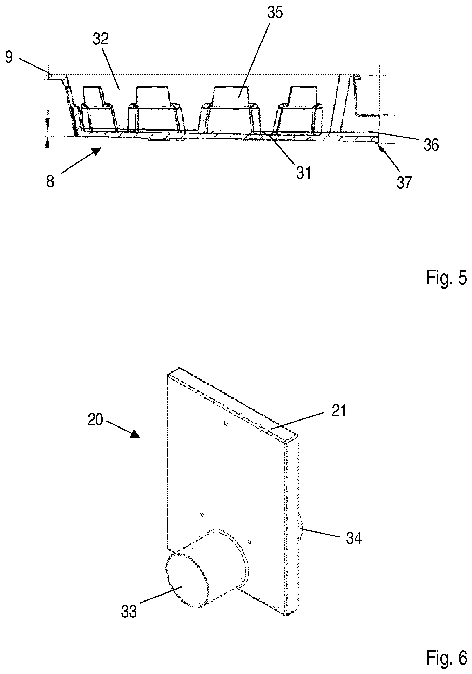

In Fig. 4 ist die Umlenkplatte 8 einzeln dargestellt. Die Umlenkplatte 8 weist einen im Wesentlichen kreisförmigen Querschnitt auf, der an den Querschnitt der Einlassöffnung 6 angepasst ist. Dementsprechend weist die Umlenkplatte 8 einen kreisförmigen Boden 31 auf, von dem eine umlaufende Seitenwand 32 ausgeht. Am vom Boden 31 abgewandten Ende der Seitenwand 32 ist der Auflagerand 9 ausgebildet. Dies ist insbesondere in Fig. 5 erkennbar, die eine geschnittene Seitenansicht der Umlenkplatte 8 zeigt.

Die Umlenkplatte 8 weist in Ihrer umlaufenden Seitenwand 32 Schmutzfängertaschen 35 auf. Dabei ist in der Seitenwand 32 ein Auslass 36 ausgebildet, der an seinem Ende eine Tropfkante 37 aufweist.

In Fig. 6 ist der Überlauf 20 in geöffneter Form als Einzelteil dargestellt. Der Überlauf 20 weist an seiner Stirnseite 21 einen relativ großen Einlaufquerschnitt auf und an seiner gegenüberliegenden Stirnseite 2 Anschlussmuffen 33, 34, die ohne zusätzliche Rohrelemente das Abflussrohr 18 bilden können, falls der Abstand zwischen der Filtereinheit 2 und einer Seitenwand des Schachtkörpers 3 nicht zu groß ist. Dieses Element kann auch in geschlossener Form ausgebildet sein.

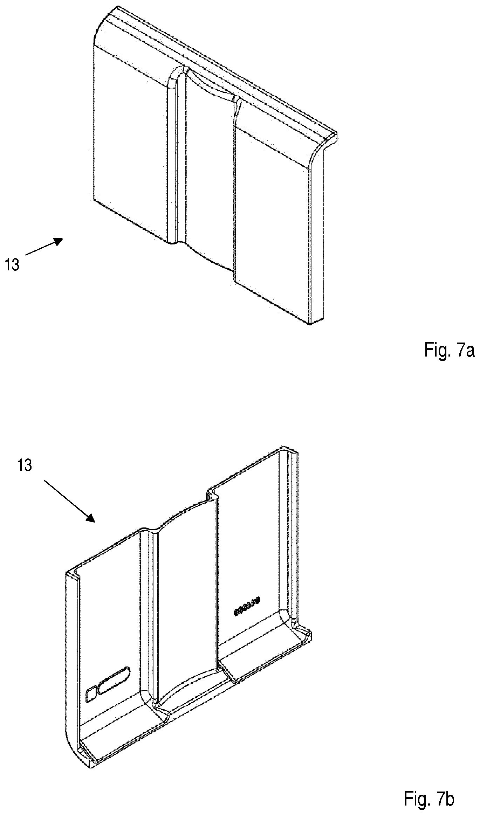

In Fig. 7a und 7b ist die Abscheideplatte 13 als Einzelteil dargestellt. Die Abscheideplatte 13 weist einen im Wesentlichen L-förmigen Querschnitt auf, sodass sie mit Abstand zum Zulauf 12 an einer Oberkante der Filtereinheit 2 oder einer Unterkante der Umlenkplatte 8 befestigt werden kann. Dabei erstreckt sich die Abscheideplatte 13 über die gesamte Breite des Schachtkörpers 3. Wasser kann also nicht seitlich zwischen dem Schachtkörper 3 und der Abscheideplatte 13 zur Filtereinheit 2 gelangen, sondern muss unterhalb der Abscheideplatte 13 hindurch strömen. Dadurch wird sichergestellt, dass Verunreinigungen, die leichter sind als Wasser, nicht an der Abscheideplatte 13 vorbei zur Filtereinheit 2 gelangen können.

Der Schachtkörper 3 ist so dimensioniert, dass er nicht nur die Filtereinheit 2 aufnehmen kann, sondern dass eine zusätzliche Vorkammer 10 ausgebildet wird. Die Filteranordnung 1 bildet damit eine kompakte monolithische Einheit, die in der Lage ist, gesetzliche und behördliche Vorgaben an die Reinheit des Wassers zu erfüllen. Dabei erfolgt ein mehrstufiger Reinigungs- /Behandlungsprozess, so dass auch hohe Anforderungen an die Reinheit des Wassers erfüllt werden können.

Der Schachtkörper 3 übernimmt zusätzliche Funktionen. Das verunreinigte Wasser wird durch die Straßenabdeckung 27 in den Schmutzfang 26 geleitet, in dem grober Schmutz wie Laub, kleinere Äst usw. zurückgehalten werden. Das Wasser wird dann über die Umlenkplatte 8 zwangsgeführt in den Schachtkörper 3 bzw. die Vorkammer 10 geleitet, in der eine Beruhigung des Wassers und eine Vorsedimentation erfolgt. Gröbere Schwebeteilchen wie Sand und andere Grobteile werden abgeschieden. Gleichzeitig wird durch die Abscheideplatte 13 eine Abscheidefunktion generiert, die Leichtstoffe wie Öle, Treibstoffe usw. zurückhält. Durch den Zulauf 12 fließt das Wasser über die in der Filtereinheit 2 ausgebildete, spiralförmige Strömungsbrücke 14 in die in der Filtereinheit 2 ausgebildete Absetzkammer 15. Die Strömungsbrücke 14 minimiert im Wasser auftretende Turbulenzen. In der Absetzkammer 15 erfolgt eine Feinsedimentation. Aufgrund des hydrostatischen Drucks wird das Wasser im Aufstrom durch den Filter 16 gepresst, in dem eine weitere Reinigung / Behandlung erfolgt.

Die Erfindung ist nicht auf eine der vorbeschriebenen Ausführungsformen beschränkt, sondern in vielfältiger Weise abwandelbar.

Die erfindungsgemäße Filteranordnung ist leistungsstärker als herkömmliche Filtervorrichtungen bzw. Wasserbehandlungsanlagen und ist auch bei starken Niederschlagsereignissen zuverlässig. Die Komponenten der Filteranordnung sind einbaufertig in die Filteranordnung integriert, so dass eine einfache und schnelle Endmontage erfolgen kann. Dabei ist die Filteranordnung aus bewährten Materialien gefertigt, so dass eine hohe Langlebigkeit gewährleistet ist. Der Filter kann, insbesondere wenn er als Filterpatrone ausgebildet ist, nach Erschöpfung seiner Leistungsfähigkeit problemlos ausgetauscht werden. Die Filteranordnung kann dabei in verschiedenen Konfigurationen bereitgestellt werden, z. B. als Sedimentations- und Abscheider-Schacht, als Sedimentations- und Abscheider-Schacht mit Filtereinheit oder als Sedimentations- und Abscheider-Schacht mit Wasserbehandlungsanlage.

**Bezugszeichenliste**

| | | | |
|---|---|---|---|
| 1 | Filteranordnung | 35 | Schmutzfängertaschen |
| 2 | Filtereinheit | 36 | Auslass |
| 3 | Schachtkörper | 37 | Tropfkante |
| 4 | Boden | | |
| 5 | Abdeckplatte | | |
| 6 | Einlassöffnung | | |
| 7 | Ausgleichsring | | |
| 8 | Umlenkplatte | | |
| 9 | Auflagerand | | |
| 10 | Vorkammer | | |
| 11 | Kanal | | |
| 12 | Zulauf | | |
| 13 | Abscheideplatte | | |
| 14 | Strömungsbrücke | | |
| 15 | Absetzkammer | | |
| 16 | Filter | | |
| 17 | Ablauf | | |
| 18 | Abflussrohr | | |
| 19 | Abflussöffnung | | |
| 20 | Überlauf | | |
| 21 | Stirnseite Überlauf | | |
| 22 | Oberkante Zulauf | | |
| 23 | Frostschicht | | |
| 24 | Untergrund | | |
| 25 | Abwasserkanal | | |
| 26 | Schmutzfang | | |
| 27 | Schachtabdeckung | | |
| 28 | Straßenoberfläche | | |
| 29 | Unterseite Abdeckplatte | | |
| 30 | Ausbuchtung | | |
| 31 | Boden Umlenkplatte | | |
| 32 | Umlaufende Seitenwand | | |
| 33 | Anschlussmuffe | | |
| 34 | Anschlussmuffe | | |

## Patentansprüche

1. Filteranordnung für einen Straßenablauf, mit einer Aufstrom-Filtereinheit und einem Schachtkörper (3), in dem die Filtereinheit (2) aufgenommen ist, wobei eine Vorkammer (10) durch einen freien Raum zwischen einer Innenwandung des Schachtkörpers (3) und der Filtereinheit (2) gebildet ist, wobei zufließendes Wasser vor Erreichen der Filtereinheit (2) in der Vorkammer (10) des Schachtkörpers (3) sammelbar ist und ein Zulauf (12) der Filtereinheit (2) mit der Vorkammer (10) in Verbindung steht, und wobei die Filtereinheit (2) einen Ablauf (17) aufweist, der über ein Abflussrohr (18) fluiddicht mit einer Abflussöffnung (19) im Schachtkörper (3) verbunden ist, wobei der Zulauf (12) oberhalb des Ablaufs (17) angeordnet ist, wobei die Filtereinheit (2) eine Absetzkammer (15) aufweist, und wobei der Zulauf (12) der Filtereinheit (2) eine Ringkammer aufweist, die über eine spiralförmige Strömungsbrücke (14) mit der innerhalb der Filtereinheit (2) ausgebildeten Absetzkammer (15) verbunden ist, und wobei der Zulauf (12) derart unterhalb einer Oberkante des Schachtkörpers (3) angeordnet ist, dass der Schachtkörper (3) nahezu vollständig durch zulaufendes Wasser gefüllt werden kann und Wasser nicht über die Oberkante des Schachtkörpers (3) hinausläuft, da es vorher über den Zulauf (12) in die Filtereinheit (2) strömt.

2. Filteranordnung nach Anspruch 1, **dadurch gekennzeichnet, dass** der Schachtkörper (3) eine Abdeckplatte (5) mit einer Einlassöffnung (6) aufweist, in der eine Umlenkplatte (8) angeordnet ist.

3. Filteranordnung nach Anspruch 2, **dadurch gekennzeichnet, dass** die Umlenkplatte (8) einen Boden (31) und eine Seitenwand (32) aufweist, die einen Auflagerand aufweist, der an einem Rand (9) der Einlassöffnung (6) aufliegt.

4. Filteranordnung nach einem der Ansprüche 2 bis 3, **dadurch gekennzeichnet, dass** die Umlenkplatte (8) einen Auslass (36) aufweist, wobei in der Abdeckplatte (5) zwischen Auslass (36) und Vorkammer (10) ein Kanal (11) ausgebildet ist.

5. Filteranordnung nach einem der Ansprüche 3 oder 4, **dadurch gekennzeichnet, dass** in der Seitenwand (32) Schmutzfängertaschen (35) ausgebildet sind.

6. Filteranordnung nach einem der Ansprüche 4 oder 5, **dadurch gekennzeichnet, dass** der Kanal (11) radial neben dem Zulauf (12) der Filtereinheit (2) endet, wobei zwischen dem Kanal (11) und dem Zulauf (12) eine Abscheideplatte (13) angeordnet ist, die den Zulauf (12) zumindest teilweise überdeckt.

7. Filteranordnung nach einem der Ansprüche 1 bis 6, **dadurch gekennzeichnet, dass** ein Überlauf (20) im Schachtkörper (3) angeordnet ist, wobei eine Einlauföffnung des Überlaufs (20) tiefer als eine Oberkante des Schachtkörpers (3) aber höher als eine Unterkante des Zulaufs (12) angeordnet ist.

8. Filteranordnung nach Anspruch 7, **dadurch gekennzeichnet, dass** der Überlauf (20) mit dem Abflussrohr (18) verbunden ist, wobei das Abflussrohr (18) insbesondere in einem Bereich in Strömungsrichtung hinter einer Einmündung des Überlaufs (20) gegenüber einem Bereich vor der Einmündung abgesenkt ist.

9. Filteranordnung nach einem der Ansprüche 2 bis 8, **dadurch gekennzeichnet, dass** oberhalb der Abdeckplatte (5) ein insbesondere korbartiger Schmutzfänger (26) angeordnet ist, der eine axiale Eintrittsöffnung an seiner oberen Stirnseite und radiale Austrittsöffnungen in seiner Umfangsfläche aufweist.

10. Filteranordnung nach einem der Ansprüche 1 bis 9, **dadurch gekennzeichnet, dass** die Filtereinheit (2) auf einem Boden (4) des Schachtkörpers (3) aufsteht und insbesondere an einem oberen Ende über Auftriebssicherungen mit dem Schachtkörper (3) verbunden ist.

11. Verfahren zum Einbauen einer Filteranordnung nach einem der Ansprüche 1 bis 10, **dadurch gekennzeichnet, dass** die Filteranordnung in einem Straßenablaufschacht derartig eingelassen wird, dass sich der Zulauf der Filtereinheit auf gleicher Höhe oder tiefer als ein oberes Ende einer Frostschutzschicht befindet.

## Claims

1. Filter assembly for a road gully, comprising an up-flow filter unit and a shaft body (3), in which the filter unit (2) is accommodated, wherein a pre-chamber (10) is formed by a free space between an inner wall of the shaft body (3) and the filter unit (2), wherein inflowing water before reaching the filter unit (2) is collectable in the pre-chamber (10) of the shaft body (3) and an inlet (12) of the filter unit (2) is associated with the pre-chamber (10), and wherein the filter unit (2) has an outlet (17), which is connected in a fluid-tight manner by way of a discharge pipe (18) with a discharge opening (19) in the shaft body (3), wherein the inlet (12) is arranged above the outlet (17), wherein the filter unit (2) has a settling chamber (15), and wherein the inlet (12) of the filter unit (2) has an annular chamber, which is connected by way of a spiral flow bridge (14) with the settling chamber (15) configured inside the filter unit (2), and wherein the inlet (12) is arranged below an upper edge of the shaft body (3), such that the shaft body (3) can be filled almost completely by incoming water and water does not run out over the upper edge of the shaft body (3), because it flows beforehand via the inlet (12) into the filter unit (2).

2. Filter assembly according to claim 1, **characterised in that** the shaft body (3) has a cover plate (5) with an inlet opening (6), in which a deflector plate (8) is arranged.

3. Filter assembly according to claim 2, **characterised in that** the deflector plate (8) has a floor (31) and a side wall (32), which has a support rim, which lies on a rim (9) of the inlet opening (6).

4. Filter assembly according to any one of claims 2 to 3, **characterised in that** the deflector plate (8) has an outlet (36), wherein a channel (11) is configured in the cover plate (5) between outlet (36) and pre-chamber (10).

5. Filter assembly according to any one of claims 3 or 4, **characterised in that** dirt trap pockets (35) are configured in the side wall (32).

6. Filter assembly according to any one of claims 4 or 5, **characterised in that** the channel (11) ends radially next to the inlet (12) of the filter unit (2), wherein a separating plate (13), which covers the inlet (12) at least in part, is arranged between the channel (11) and the inlet (12).

7. Filter assembly according to any one of claims 1 to 6, **characterised in that** an overflow (20) is arranged in the shaft body (3), with an inflow opening of the overflow (20) being arranged lower than an upper edge of the shaft body (3) but higher than a lower edge of the inlet (12).

8. Filter assembly according to claim 7, **characterised in that** the overflow (20) is connected with the discharge pipe (18), wherein the discharge pipe (18) is lower more particularly in a region in the direction of flow after a junction with the overflow (20) than in a region before the junction.

9. Filter assembly according to any one of claims 2 to 8, **characterised in that** a more particularly basket-like dirt trap (26) is arranged above the cover plate (5), said dirt trap having an axial entry opening on its upper face and radial exit openings in its circumferential surface.

10. Filter assembly according to any one of claims 1 to 9, **characterised in that** the filter unit (2) stands upright on a floor (4) of the shaft body (3) and more particularly is connected on an upper end with the shaft body (3) by way of anti-buoyancy devices.

11. Method for installing a filter assembly according to any one of claims 1 to 10, **characterised in that** the filter assembly is introduced into a road downcomer such that the inlet of the filter unit is located at the same height or lower than an upper end of a frost protection layer.

## Revendications

1. Agencement de filtration pour une bouche d'égout, avec une unité de filtration à flux ascendant et un corps de puits (3), dans lequel l'unité de filtration (2) est reçue, dans lequel une préchambre (10) est formée par un espace libre entre une paroi interne du corps de puits (3) et l'unité de filtration (2), dans lequel de l'eau affluente peut être recueillie avant d'atteindre l'unité de filtration (2) dans la préchambre (10) du corps de puits (3) et une entrée (12) de l'unité de filtration (2) est en communication avec la préchambre (10), et dans lequel l'unité de filtration (2) présente une sortie (17) qui est reliée via un tube de décharge (18) de manière étanche aux fluides à une ouverture de décharge (19) dans le corps de puits (3), dans lequel l'entrée (12) est agencée au-dessus de la sortie (17), dans lequel l'unité de filtration (2) présente une chambre de décantation (15) et dans lequel l'entrée (12) de l'unité de filtration (2) présente une chambre annulaire qui est reliée via un pont d'écoulement spiralé (14) à la chambre de décantation (15) aménagée à l'intérieur de l'unité de filtration (2) et dans lequel l'entrée (12) est agencée en dessous d'un bord supérieur du corps de puits (3) de sorte que le corps de puits (3) puisse être rempli presque complètement par de l'eau entrante et que l'eau ne puisse passer par-dessus le bord supérieur du corps de puits (3), car elle s'écoule avant dans l'unité de filtration (2) via l'entrée (12).

2. Agencement de filtration selon la revendication 1, **caractérisé en ce que** le corps de puits (3) présente une plaque de recouvrement (5) avec une ouverture d'entrée (6) dans laquelle est agencée une plaque déflectrice (8).

3. Agencement de filtration selon la revendication 2, **caractérisé en ce que** la plaque déflectrice (8) présente une base (31) et une paroi latérale (32) qui présente un bord d'appui qui s'applique sur un bord (9) de l'ouverture d'entrée (6).

4. Agencement de filtration selon l'une quelconque des revendications 2 à 3, **caractérisé en ce que** la plaque déflectrice (8) présente une sortie (36), dans lequel un canal (11) est aménagé dans la plaque de recouvrement (5) entre la sortie (36) et la préchambre (10).

5. Agencement de filtration selon l'une quelconque des revendications 3 ou 4, **caractérisé en ce que** des poches ramasse-débris (35) sont aménagées dans la paroi latérale (32).

6. Agencement de filtration selon l'une quelconque des revendications 4 ou 5, **caractérisé en ce que** le canal (11) se termine radialement près de l'entrée (12) de l'unité de filtration (2), dans lequel est agencée entre le canal (11) et l'entrée (12) une plaque de séparation (13) qui recouvre au moins en partie l'entrée (12).

7. Agencement de filtration selon l'une quelconque des revendications 1 à 6, **caractérisé en ce qu'**un trop-plein (20) est agencé dans le corps de puits (3), dans lequel une ouverture d'entrée du trop-plein (20) est agencée plus profondément qu'un bord supérieur du corps de puits (3), mais plus haut qu'un bord inférieur de l'entrée (12).

8. Agencement de filtration selon la revendication 7, **caractérisé en ce que** le trop-plein (20) est relié au tube de décharge (18), dans lequel le tube de décharge (18) est abaissé en particulier dans une zone de la direction d'écoulement derrière une jonction du trop-plein (20) vis-à-vis d'une zone située avant la jonction.

9. Agencement de filtration selon l'une quelconque des revendications 2 à 8, **caractérisé en ce qu'**au-dessus de la plaque de recouvrement (5) est agencé un ramasse-débris (26) en particulier en forme de panier, qui présente une ouverture d'entrée axiale sur son côté frontal supérieur et des ouvertures de sortie radiales dans sa surface périphérique.

10. Agencement de filtration selon l'une quelconque des revendications 1 à 9, **caractérisé en ce que** l'unité de filtration (2) s'appuie sur une base (4) du corps de puits (3) et est en particulier reliée à une extrémité supérieure au corps de puits (3) via des fixations de suspension.

11. Procédé de montage d'un agencement de filtration selon l'une quelconque des revendications 1 à 10, **caractérisé en ce que** l'agencement de filtration est inséré dans un puits de bouche d'égout de sorte que l'entrée de l'unité de filtration se trouve à la même hauteur ou plus en profondeur qu'une extrémité supérieure d'une couche de protection antigel.
